# EUROPÄISCHE PATENTANMELDUNG

(11) **EP 1 953 415 A2**
(43) Veröffentlichungstag der Anmeldung: **06.08.2008**
(21) Anmeldenummer: 08001822.9
(22) Anmeldetag: 31.01.2008
(51) Int. Cl.: F16G 13/06, H02G 11/00

(54) **Führungsrinne zum Führen von Energieführungsketten**

(30) Priorität: 02.02.2007 DE 102007006043
(71) Anmelder: FLEXATEC GmbH, 63456 Hanau (DE)
(72) Erfinder: Steinmüller, Volker, 63579 Freigericht (DE); Krüger, Michael, 63512 Hainburg (DE); Vujic, Naser, 64546 Mörfelden-Walldorf (DE)
(74) Vertreter: Grimm, Ekkehard

(57) **Zusammenfassung**

Die Erfindung betrifft eine Führungsrinne zum Führben von Energieführungsketten mit zwei Seitenwänden, wobei mindestens eine der Seitenwände aus einem Sockelteil (3), das Befestigungselemente aufweist, und einer senkrechten Basis-Führungswand aufgebaut ist, die dadurch gekennzeichnet ist, dass die Führungswand (4) mit dem Sockelteil (3) ein Grundelement (2) bildet und dass an der oberen freien Kante (15) der Basis-Führungswand (4) Verbindungselemente (14,19,20) angeformt sind, auf die mindestens eine weitere die Basis-Führungswand (4) erhöhende Aufbau-Führungswand (13), die angeformte Verbindungselemente (16,18,21) aufweist, aufsteckbar ist und mittels denen eine solche Aufbau-Führungswand (13) an der Basis-Führungswand (4) verriegelbar ist.

## Beschreibung

Die vorliegende Erfindung betrifft eine Führungsrinne zum Führen von Energieführungsketten mit zwei Seitenwänden, wobei mindestens eine der Seitenwände aus einem Sockelteil, das Befestigungselemente aufweist, und einer senkrechten Basis-Führungswand aufgebaut ist.

Solche Führungsrinnen sind allgemein bekannt und dienen dazu, Energieführungsketten in einer definierten Orientierung zu führen, die dazu eingesetzt werden, flexible Leitungen aller Art zu schützen. Diese Energieführungsketten legen sich zwischen die Seitenwände solcher Führungsrinnen ein. Wenn der Abnehmer, mit dem das verfahrbare Ende der Energieführungskette verbunden ist, an seiner am weitesten von dem Anschlusspunkt entfernten Stelle befindet und wieder zurück zu dem Anschlusspunkt verfährt, legt sich die Energieführungskette um und führt oberhalb des dann unten liegenden Teils der Führungskette, auch als Untertrum genannt, zurück (wobei dieser sich umlegende und zurückführende Teil der Energieführungskette als Obertrum bezeichnet wird). Um das Obertrum oberhalb des Untertrums gleiten zu lassen, ohne dabei Abnutzungen an den zugewandten Flächen von Untertrum und Obertrum hervorzurufen, sind entsprechende Gleitteile vorgesehen, die entweder in der Energieführungskette integriert sein können oder Teil der stationären Führungsrinne sind.

Solche Rinnen müssen den jeweiligen Energieführungsketten sowohl in Bezug auf die Querschnittsdimensionen der Energieführungskette, d. h. Breite und Höhe der Kettenglieder, als auch der Länge angepasst werden.

Eine Führungsrinne, wie sie eingangs angegeben ist, bzw. entsprechende Seitenwände, aus denen solche Führungsrinnen aufgebaut sind, sind in der WO 97/47899 A1, der DE 29907449 U1, der DE 29522353 U1, der DE 20305618 U1 und der DE 19649127 B4 beschrieben.

Die WO 97/47899 A1 zeigt eine Führungsrinne mit zwei langgestreckten, parallelen Seitenteilen, zwischen denen eine Energieführungskette in Längsrichtung ablegbar ist. Diese Seitenteile sind einstückige, L-förmige Kastenprofile. An der Innenseite der Seitenteile sind schräg nach oben ausgerichtete Nuten, die in Längsrichtung verlaufen, vorgesehen, in die Zubehörteile, beispielsweise Gleitschienen für die Energieführungskette, eingehängt werden können. Die beiden Seitenteile werden, in Abhängigkeit von der Breite der Energieführungskette, in bestimmten Abständen an einer festen Unterlage verschraubt.

Die DE 29907449 U1 zeigt auch L-förmige Seitenteile, gebildet aus einem einteiligen Kastenprofil, bei der etwa in der Mitte seiner Höhe auf der Innenfläche eine Nut ausgebildet ist, um darin Gleitschienen einhängen zu können.

Die DE 29522353 U1 zeigt Seitenteile, die in ihrem Aufbau im Wesentlichen denjenigen entsprechen, die in der WO 97147899 A1 gezeigt sind.

Die DE 20305618 U1 beschreibt eine Führungsrinne für Energieführungsketten mit langgestreckten, parallelen und mit Befestigungsmitteln auf einem Untergrund befestigbaren Seitenteilen, zwischen denen das Untertrum einer Energieführungskette geführt wird. Auf der Innenseite sind Nuten ausgebildet, um Auflageschienen für das Obertrum einzuhängen. An der Außenseite können in Nuten Montagewinkel eingehängt werden, um die Seitenteile gegen eine Unterlage zu verspannen. Um die Seitenteile in ihrem Abstand zueinander einstellbar an einer Unterlage zu befestigen, werden C-Profilschienen, quer zu der Längserstreckung der Seitenteile, verwendet, in denen diese Seitenteile mittels verschiebbaren Halteteilen befestigt werden.

DE 19649127 B4 zeigt eine Führungseinrichtung für Energieführungsketten, bei der zwei Wannen nebeneinander angeordnet sind, um zwei entsprechende Führungsketten nebeneinander zu führen. Beide Wannen teilen gemeinsam die mittlere Wand.

Der vorliegenden Erfindung liegt die Aufgabe zugrunde, eine Führungsrinne zum Führen von Energieführungsketten der eingangs genannten Art so auszubilden, dass sie variabel auch von dem Kunden aufgebaut werden kann und einfach, aber dauerhaft, zu montieren ist.

Gelöst wird diese Aufgabe durch eine Führungsrinne zum Führen von Energieführungsketten mit zwei Seitenwänden, wobei mindestens eine der Seitenwände aus einem Sockelteil, das Befestigungselemente aufweist, und einer senkrechten Basis-Führungswand aufgebaut ist, die dadurch gekennzeichnet ist, dass die Führungswand mit dem Sockelteil ein Grundelement bildet und dass an der oberen freien Kante der Basis-Führungswand Verbindungselemente angeformt sind, auf die mindestens eine weitere die Basis-Führungswand erhöhende Aufbau-Führungswand, die angeformte Verbindungselemente aufweist, aufsteckbar oder aufschiebbar ist und mittels denen eine solche Aufbau-Führungswand an der Basis-Führungswand verriegelbar ist.

Mit einem solchen Aufbau der Seitenwände ist dem Kunden die Möglichkeit gegeben, Führungsrinnen individuell aus Grundkomponenten aufzubauen und diese insbesondere in der Höhe zu variieren, ohne dass dazu gesonderte Hilfswerkzeuge benötigt werden. Die Führungswände können aufeinander gesteckt werden oder alternativ ineinander geschoben werden, um dadurch die Führungsrinne der Energieführungskette, die darin geführt werden soll, anzupassen. Das Grundelement kann als standardisiertes Bauteil ausgelegt werden, das für die unterschiedlichen Führungsrinnen, die der Kunde, oder auch der Monteur, vor Ort aufbauen möchte, eingesetzt wird.

Um das Grundelement noch variabler einsetzbar zu gestalten, sollten die Basis-Führungswand und das Sockelteil als getrennte Teile ausgebildet sein, die mittels angeformter Verbindungselemente verbunden sind. In dieser Ausgestaltung können mit dem Sockelteil Führungswände unterschiedlicher Höhe verbunden werden.

Um die Seitenwände mittels der Aufbau-Führungswände beliebig erhöhen zu können, ohne dass dazu unterschiedliche Aufbau-Führungswände bereitgestellt werden müssen, werden an den Aufbau-Führungswänden an der Oberseite und an der Unterseite jeweilige korrespondierende Verbindungselemente vorgesehen sind; dadurch kann eine solche Aufbau-Führungswand an beliebigen Stellen in den Seitenteilen eingesetzt werden, um die Höhe eines solchen Seitenteils zu vergrößern. Diese Aufbau-Führungswände müssen folglich nur aufeinander gesteckt werden und fest miteinander verriegelt werden. Die Anordnung ist auch geeignet, um die einzelnen Teile von der Stirnseite aus ineinander zu schieben, um sie miteinander zu verriegeln.

Bevorzugt bilden die Verbindungselemente an den jeweiligen Kanten der Basis-Führungswand und der Aufbau-Führungswände eine Art einer Nut-Feder-Verbindung. Dazu können die Verbindungselemente Hakenteile aufweisen, die sich an der jeweiligen anderen Führungswand verhaken. Vorzugsweise sollten sich diese Hakenteile unlösbar mit der anderen Führungswand verbinden,

In einer bevorzugten Ausgestaltung sind die Verbindungselemente an der Kante der Führungswand durch zwei Schenkel gebildet, die die Kante der damit verbunden Führungswand seitlich übergreifen.

Hierbei können die zwei Schenkel parallel zueinander verlaufen, so dass dann diese beiden Schenkel in einer weiteren Ausgestaltung einen Teil der Außenfläche der Führungswand bilden.

Der eine Teil der Verbindungsteile an den Führungswänden kann so aufgebaut sein, dass die seitlichen Flächen im Bereich der Kante, die durch die Schenkel der damit verbundenen anderen Führungswand übergriffen werden, keilförmig zu der Kante hin zulaufen.

Für eine zusätzliche Zentrierung von zwei miteinander verbundenen Führungswänden sollten zwischen den beiden Schenkeln der einen Kante der Führungswand einerseits und an der anderen Kante der anderen Führungswand andererseits ineinander greifende Zentrierelemente vorgesehen werden. Solche Zentrierelemente können durch mindestens einen Steg einerseits und mindestens eine dazu korrespondierende Nut andererseits gebildet werden.

In Verbindung mit den keilförmig zulaufenden Flächen an der einen Kante der Führungswand sollte eine solche Nut an dieser Kante zwischen den keilförmig zulaufenden Flächen ausgebildet werden und der mindestens eine Steg sollte an der Kante zwischen den beiden Schenkeln der anderen Führungswand gebildet werden.

Die Seitenwände können über die Länge der Führungsrinne aus einzelnen Führungswänden einer standardisierten Länge zu größeren Längen zusammengesetzt werden. Solche Längen sollten bestimmten Lagergrößen entsprechen, beispielsweise 3 Meter, 4 Meter oder 6 Meter, die dann vor Ort zu größeren Längen aneinandergefügt werden.

Um eine hohe Stabilität zu erreichen, werden dann die auf die Basis-Führungswände aufgesteckten oder aufgeschobenen Abschnitte von Aufbau-Führungswänden so positioniert, dass die jeweiligen Stoßstellen der übereinander angeordneten Führungswände zueinander versetzt sind.

Im Bereich einer solchen Stoßstelle kann zusätzlich zur Aussteifung mindestens ein Zentrierelement in die Stirnseite der Führungswände eingesetzt werden. Hierzu eignet sich vorzugsweise ein stiftförmiges Teil.

Bei dem Sockelteil des Grundelements kann es sich um ein plattenförmiges Teil handeln.

Falls das Grundelement, wie es eingangs beschrieben ist, aus zwei Teilen, nämlich einem Sockelteil und einer gesonderten Basis-Führungswand, aufgebaut ist, ist es bevorzugt, dass die Verbindungsteile zwischen Sockelteil und Basis-Führungswand in einer gleichen Form und mit gleicher Wirkungsweise verbunden sind, wie die Verbindungsteile zwischen der Oberseite der Basis-Führungswand und einer darauf aufgesteckten Aufbau-Führungswand; diese Aufbau-Führungswand könnte auch seitlich aufgeschoben werden.

Um die Seitenwände an einer Auflagefläche zu verankern, sollten in das Sockelteil des Grundelements Befestigungselemente in Eingriff gebracht werden, mit denen das Sockelteil an einer Unterlagefläche verankerbar ist.

Das Befestigungselement wird vorzugsweise durch ein plattenförmiges Teil gebildet, das eine Dicke aufweist, die in etwa der Dicke des Sockelteils entspricht. Ein solches Befestigungselement kann sich unmittelbar an die Kante des Sockelteils anschließen und daran verhakt werden. Solche Befestigungselemente können auch, entsprechend dimensioniert, als Abstandsteile eingesetzt werden, um die beiden Seitenteile, die eine Führungsrinne bilden, in exaktem Abstand zueinander zu positionieren. Zusätzlich kann zwischen Sockelteil und Befestigungselement eine die Breite des Sockelteils verbreiternde Leiste eingefügt werden. Eine solche Leiste sollte vorzugsweise eine Dicke aufweisen, die der Dicke des Grundelements entspricht, so dass diese Leiste mit dem Grundelement eine ebene Auflagefläche für eine Energieführungskette darstellt.

Falls die Anzahl der Verankerungspunkte der Seitenteile an einer Auflagefläche vergrößert werden soll, kann es bevorzugt sein, mehrere Befestigungselemente miteinander zu verhaken, so dass sie eine Einheit bilden. Hierzu können an den seitlichen Kanten der Befestigungselemente Verbindungsteile vorgesehen werden. Zwei solcher Befestigungselemente sind auch an einer Verbindungsstelle dienlich, wo zwei Grundelemente aneinander gefügt werden um die erforderliche Länge der Seitenteile zu erreichen.

An dem Sockelteil können Verbindungsteile in Form von Nuten und/oder Stegen vorgesehen werden, in die sich korrespondierende Verbindungsteile in Form von Nuten und/oder Stegen des Befestigungselements und/oder der Leiste einhaken.

Um die Befestigungsteile sowohl mit dem Grundelement als auch mit der Leiste kompatibel zu gestalten, sollte die in den Sockelteil eingehakte Leiste an ihrer freien Längskante Nuten und/oder Stege aufweisen, die den Nuten und/oder Stegen des Sockelteils entsprechen.

Bevorzugt werden die Führungswände als Kastenprofil ausgebildet.

In den Seitenflächen der Führungswände können, in Längsrichtung parallel zu den Verbindungskanten, Befestigungsnuten ausgebildet sein, die zum Beispiel dazu eingesetzt werden können, um darin Auflageelemente einzuhängen.

Die Führungswände, die Sockelteile und die Leisten werden bevorzugt aus Aluminium, in Form von Strangpressprofilen gefertigt.

Weitere Einzelheiten und Merkmale der Erfindung ergeben sich aus der nachfolgenden Beschreibung von Ausführungsbeispielen anhand der Zeichnung. In der Zeichnung zeigt
Figur 1 eine perspektivische Ansicht einer Seitenwand mit Blick auf das stirnseitige Ende, die die eine Seite einer Führungsrinne bildet, mit einem Grundelement und einer Aufbau-Führungswand, die gerade auf die Basis-Führungswand des Grundelements aufgesetzt wird,
Figur 2 eine perspektivische Ansicht entsprechend Figur 1, bei der die Aufbau-Führungswand der Figur 1 bereits angebracht ist und gerade eine weitere Aufbau-Führungswand augesetzt wird,
Figur 3 eine Führungsrinne mit zwei Seitenwänden der Form, wie sie in Figur 1 gezeigt ist, wobei mehrere dieser Grundelemente und Aufbau-Führungswände hintereinander angeordnet sind,
Figur 4 eine Ansicht auf die Stirnseite einer Führungsrinne, die aus Grundelementen gebildet sind, bei denen der Sockelteil und die Führungswand aus zwei Teilen gebildet und miteinander verbunden sind,
Figur 5 die Anordnung der Figur 4, mit einer zusätzlichen Aufbau-Führungswand,
Figur 6 eine Ansicht entsprechend der Figur 5, in der gegenüber Figur 5 das Sockelteil breiter ausgeführt ist,
Figur 7 eine Detailansicht des Verbindungsbereichs zwischen zwei Führungswänden,
Figur 8 eine Detailansicht der Führungswand, wie sie in den Figuren 1 und 2 zu sehen ist, mit in einer Nut eingehängter Gleitschiene, und
Figur 9 eine Detailansicht eines Verbindungselements, das in den Anordnungen der Figuren 1, 2, 4 und 5 gezeigt ist, das das Sockelelement verankert.

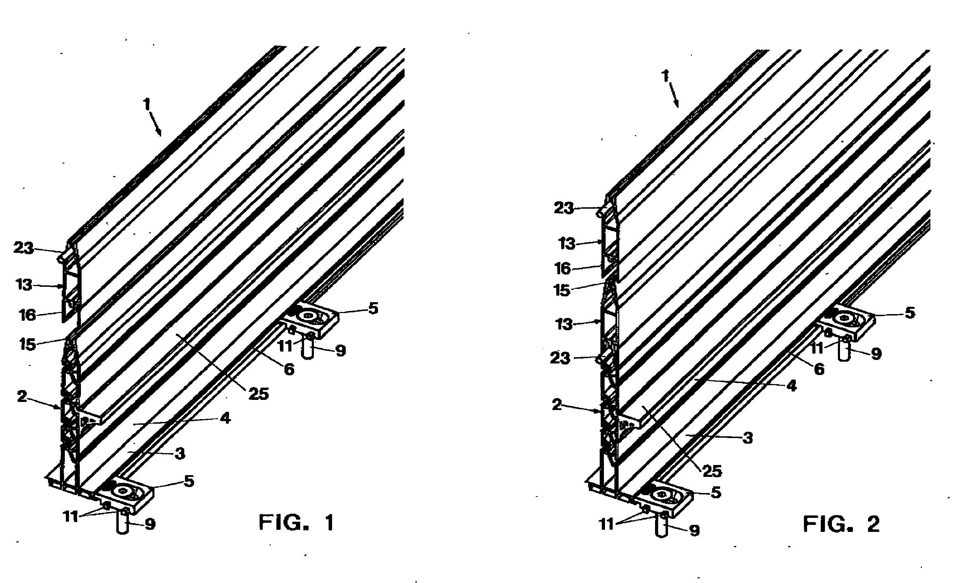

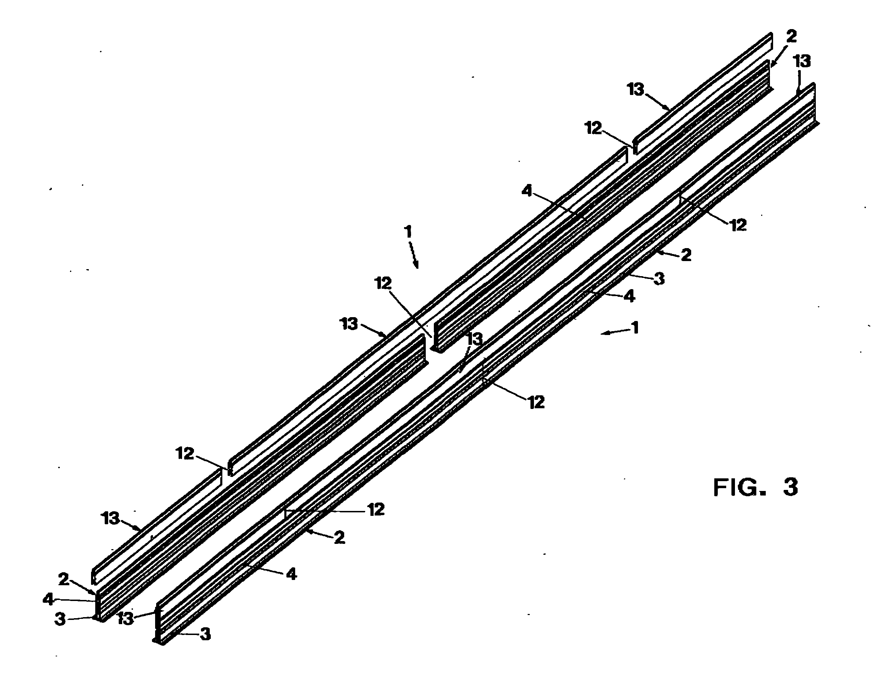

Eine Führungsrinne, wie sie schematisch in Figur 3 dargestellt ist, um Energieführungsketten entlang des Verfahrwegs beispielsweise eines verfahrbaren Abnehmers zu führen, ist aus zwei Seitenteilen 1 aufgebaut, die jeweils mehrere hintereinander angeordnete Grundelemente 2 (bei dem Ausführungsbeispiel, wie es in Figur 3 gezeigt ist, sind zwei dieser Grundelemente 2 hintereinander angeordnet, wie dies deutlich anhand des linken Seitenteils in Figur 3, das in einer Explosionsdarstellung gezeigt ist, ersichtlich ist) umfassen. Ein solches Grundelement 2, wie es in einer vergrößerten Darstellung in Figur 1 zu sehen ist, umfasst einen plattenförmigen Sockelteil 3 sowie eine sich senkrecht davon erstreckende Führungswand, die, als Teil des Grundelements 2, in den Figuren als Basis-Führungswand 4 bezeichnet wird. Das gesamte Grundelement 2, d. h. der plattenförmige Sockelteil 3 und die Basis-Führungswand 4, sind als Kastenprofil ausgebildet, mit einer Hohlraumstruktur, die durch mehrere Zwischenstege ausgesteift ist.

Bei den Bauelementen der Seitenteile, d. h. dem Grundelement 2 sowie den weiteren Teilen, die noch nachfolgend beschrieben sind, handelt es sich um strangextrudierte Teile, vorzugsweise aus Aluminium, die einfach als Endlosmaterialstränge hergestellt und auf die entsprechende Länge abgeschnitten werden können, wodurch der gesamte Aufbau der Seitenteile 1 kostengünstig erfolgen kann.

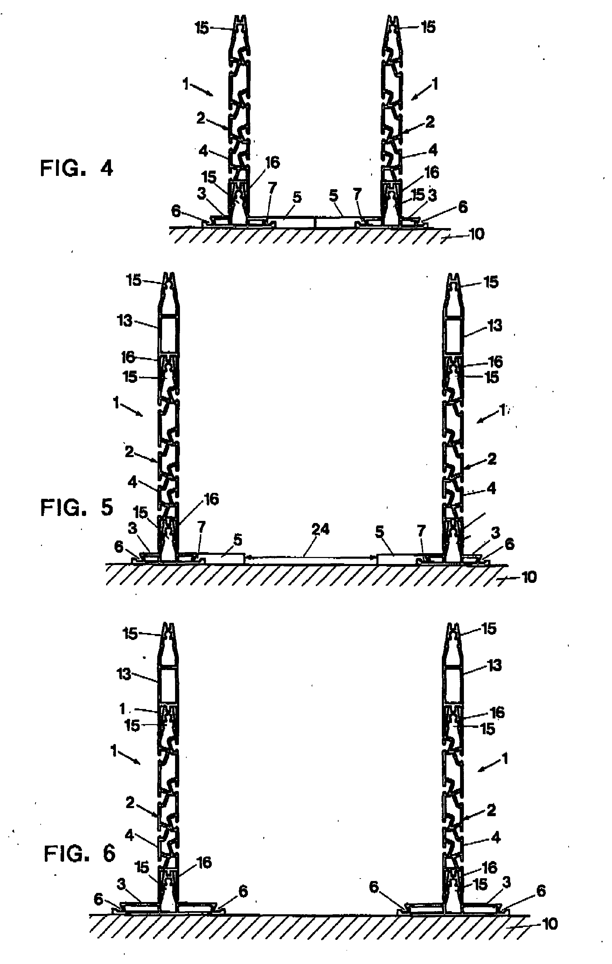

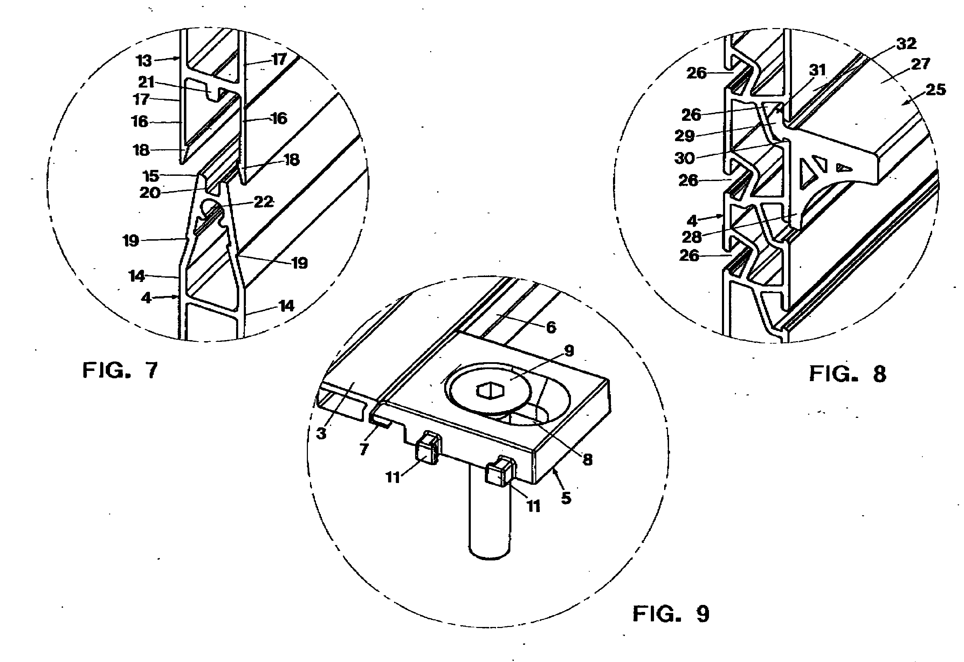

Der plattenförmige Sockelteil 3 des Grundelements 2 wird an einer Unterlage mit Befestigungselementen 5 gehalten, wie dies in den Figuren 1 und 2 und in einer vergrößerten Detailansicht der Figur 9 zu sehen ist. Hierzu ist an der freien Längskante des plattenförmigen Sockelteils 3 eine Nut 6 ausgebildet, in die eine Feder 7, wie deutlich anhand der Figur 9 zu sehen ist, eingreift. Das Befestigungselement 5, bei dem es sich um eine kleine, quadratische oder rechteckige Platte handelt, weist ein Befestigungsloch 8 auf, durch das eine Befestigungsschraube 9 geführt ist, um den Sockelteil 3 an einer Unterlagefläche 10, wie dies beispielsweise in Figur 4 und 5 zu sehen ist, festzuschrauben. Dadurch wird der Sockelteil 3 des Grundelements 2 gegen die Unterlagenfläche 10 gedrückt.

Um die Seitenteile 1 in ihrer Orientierung auf der Unterlagefläche 10 justieren zu können, sind die Befestigungslöcher 8 als Langlöcher ausgeführt.

Der plattenförmige Sockelteil 3 ist in einer Dicke ausgeführt, die derjenigen des plattenförmigen Sockelteils 3 entspricht, so dass die Oberseitenfläche des Befestigungselements 5 mit der Oberseite des plattenförmigen Sockelteils 3 eine Ebene bildet. Aus dem entsprechenden Grund ist der Schraubenkopf der Befestigungsschraube 9 in dem Befestigungsloch 8 versenkt.

Falls mehrere Befestigungselemente 5 unmittelbar nebeneinander angeordnet werden müssen, um Kräften, die auf die Seitenteile 1 einwirken, standzuhalten, können mehrere der Befestigungselemente 5 unmittelbar nebeneinander angeordnet und in der Nut 6 des plattenförmigen Sockelteils 3 eingehakt werden. Solche unmittelbar nebeneinanderliegenden Befestigungselemente 5 werden dann durch Verbindungsteile in Form der in Figur 9 zu sehenden Zapfen 11, die in entsprechenden Nuten des anderen daran angrenzenden Befestigungselements 5 eingreifen, gehalten. Zwei dieser Befestigungselemente können beispielsweise an der Stoßstelle zwischen zwei aneinandergefügten Grundelementen 2, die in Figur 3 mit dem Bezugszeichen 12 bezeichnet ist, vorgesehen werden. Gerade an einer solchen Stoßstelle 12 dienen die Verbindungselemente in Form der Zapfen 11 zwischen zwei Befestigungselementen 5 dazu, die Teile zueinander zu zentrieren.

Um die Höhe der Seitenteile 1 zu erhöhen, kann auf die Basis-Führungswand 4 eine Aufbau-Führungswand 13 aufgesteckt oder aufgeschoben werden. Hierzu sind sowohl an der oberen Kante der Basis-Führungswand 4 als auch an der unteren Kante der Aufbau-Führungswand 13 Verbindungselemente angeformt. Die Verbindungselemente an der Basis-Führungswand 4 bestehen darin, dass, im Querschnitt gesehen, die seitlichen Flächen 14 zu der freien Kante 15 hin keilförmig zulaufen. Dagegen sind die Verbindungselemente an der unteren Kante der Aufbau-Führungswand 13 durch zwei Schenkel 16 gebildet, die die seitlichen Flächen 17 von der Aufbau-Führungswand 13 verlängern. An den Enden der Schenkel 16 sind, auf deren Innenseite, hakenförmige Vorsprünge 18 ausgebildet, die dann, wenn die Aufbau-Führungswand 13 von oben auf die Basis-Führungswand 4 aufgesteckt wird, Vorsprünge 19 der Basis-Führungswand 4 hintergreifen und somit die Aufbau-Führungswand 13 an der Basis-Führungswand 4 verriegeln. Die schräg verlaufenden Flächen 14 der Basis-Führungswand 4 sind so dimensioniert, dass, beim Aufsetzen der Aufbau-Führungswand 13, die hakenförmigen Vorsprünge 18 daran gleiten und leicht gespreizt werden, um sie dann in einen form- und kraftschlüssigen Eingriff mit den Vorsprüngen 19 zu bringen. Wenn die Aufbau-Führungswand 13 auf der Basis-Führungswand 4 aufgesetzt ist, bilden die seitlichen Flächen 14 der Basis-Führungswand 4 und die seitlichen Flächen 17 der Aufbau-Führungswand 13 eine Ebene. Um die Aufbau-Führungswand 13 an der Basis-Führungswand 4 im Bereich der Verbindungsstelle 12 zusätzlich zu zentrieren, ist in der oberen Stirnseite (freie Kante 15) der Basis-Führungswand 4 eine Zentriernut 20 ausgebildet, in die sich ein Zentriersteg 21 der Aufbau-Führungswand 13 einlegt. Mit dem in die Zentriernut 20 eingreifenden Zentriersteg 21 wird der Verbindungsstelle 12 eine zusätzliche Stabilität, insbesondere gegen seitliche Kräfte, verliehen.

Es ist an dieser Stelle darauf hinzuweisen, dass die Zentriernut 20 an der Aufbau-Führungswand 13 angeordnet sein könnte, während der entsprechende Zentriersteg 21 dann an der Basis-Führungswand 4 angeordnet wäre. Auch sollte ersichtlich sein, dass die schräg verlaufenden Flächen 14, wie sie an der Basis-Führungswand 4 ausgebildet sind, der Aufbau-Führungswand 13 zugeordnet werden könnten, während dann die Basis-Führungswand 4 die Schenkel 18 mit den hakenförmigen Vorsprüngen 18 aufweisen würde. Die Schenkel 16, die hakenförmigen Vorsprünge 18 sowie die Vorsprünge 19 sind so ausgelegt, dass dann, wenn die Aufbau-Führungswand 13 aufgesteckt ist, diese Aufbau-Führungswand 13 nicht mehr durch den Kunden, obwohl er diese Teile selbst montieren kann, voneinander lösbar sind, und dauerhaft verbunden sind.

Wie weiterhin in Figur 7 zu sehen ist, befindet sich im oberen Bereich, unterhalb der Zentriernut 20, eine nach unten offene Klemmbohrung 22, in die als Zentrierelement ein Zentrierstift 23 eingesetzt wird, wie dies die Figuren 1 und 2 zeigen. Dieser Zentrierstift 23 steht von der Stirnseite vor und setzt sich in die entsprechende Klemmbohrung 22 der sich daran anschließenden Führungswand ein.

Um die Höhe der Seitenteile 1 noch weiter zu erhöhen, können auf die Aufbau-Führungswand 13, wie sie in Figur 1 gezeigt ist, weitere Aufbau-Führungswände 13 aufgesteckt werden, wie dies in Figur 2 gezeigt ist, in der an der Basis-Führungswand 4 bereits eine erste Aufbau-Führungswand 13 fest verbunden ist und gerade eine weitere Aufbau-Führungswand 13 aufgesteckt wird.

Wenn das Seitenteil 1 eine ausreichende Höhe aufweist, indem mehrere Aufbau-Führungswände 13 auf die Basis-Führungswand 4 aufgesteckt sind, könnte auf die Kante der obersten Aufbau-Führungswand 13 (beispielsweise in der Ausführungsform der Figur 2) ein Abdeckprofil aufgesteckt werden, das U-förmig im Querschnitt aufgebaut ist und dem unteren Teil der Aufbau-Führungswand 13, die in Figur 7 zu sehen ist, entspricht. Anhand der Figur 3 ist zu sehen, dass die jeweiligen übereinanderliegenden Führungswände, d. h. die Basis-Führungswände 4 und die Aufbau-Führungswände 13, mit ihren jeweiligen Stoßstellen 12 so versetzt werden, dass Stoßstellen 12 von übereinander liegenden Führungswänden nicht unmittelbar an einer gleichen Stelle übereinander liegen. Durch diesen versetzten Aufbau der Führungswände 4 und 13 kann eine erhöhte Stabilität der Seitenteile 1 erreicht werden.

Anhand der Figur 4 ist zu sehen, dass die Befestigungselemente 5 der beiden Seitenteile 1 unmittelbar aneinander stoßen, so dass Befestigungselemente 5 gleichzeitig Abstandsteile bilden, um die beiden Seitenteile 2 definiert zu einander zu beabstanden. Für andere Abstände können die Befestigungselemente 5 entsprechend dimensioniert werden oder es können zwischen die beiden Befestigungselemente 5 weitere Zwischenstücke eingefügt werden, beispielsweise in den Zwischenraum, der durch den Pfeil 24 in Figur 5 gezeigt ist. Weiterhin sind in den Figuren 4 bis 6 an beiden Seiten der Sockelteile 3 Nuten 6 vorgesehen, so dass auch auf der Außenseite der Seitenteile 1 in diesen Nuten 6 der Sockelteile 3 Befestigungselemente 5 angebracht werden könnten. Auch sollte ersichtlich sein, dass die Befestigungselemente 5, wie sie in den Figuren 4 und 5 gezeigt sind, in Form von durchgehenden Leisten ausgeführt sein können; darüber hinaus könnten zwischen das jeweilige Sockelteil 3 und das Befestigungselement 5 Leisten eingefügt werden, die sich mit einer Feder, die der Feder 7 des Befestigungselements 5 entspricht, in der Nut 6 des Befestigungselements einhaken, während auf der gegenüberliegenden Seite eine solche Leiste dann eine Nut aufweisen würde, die der Nut des Grundelements 2 entspricht, wo sich dann die Feder 7 des Befestigungselements 5 einhaken könnte.

Während in den Ausführungsformen der Figuren 1 und 2 das plattenförmige Sockelteil 3 und die Basis-Führungswand 4 des Grundelements 2 einteilig ausgeführt sind, ist in den Ausführungsformen, wie sie in den Figuren 4 und 6 dargestellt ist, das Grundelement 2 aus zwei getrennten Teilen zusammengesetzt. Hierzu ist an dem plattenförmigen Sockelteil 3 ein Verbindungselement angeformt, das in seinem Querschnittsaufbau der oberen Kante der Basis-Führungswand 4, wie sie in Figur 7 zu sehen ist, entspricht, während entsprechend die Unterseite der Basis-Führungswand 4 einen Aufbau mit den beiden Schenkeln 16 aufweist, wie dies in Figur 7 anhand der Aufbau-Führungswand 13 gezeigt und erläutert ist. Mit einem solchen zweiteiligen Aufbau des Grundelements 2 wird dem Kunden noch eine größere Variationsmöglichkeit an die Hand gegeben, so dass der Kunde beispielsweise unterschiedlich hohe Basis-Führungswände 4 an dem plattenförmigen Sockelteil 3 anbringen kann.

In den Figuren 1 und 2 sind Gleitschienen 25 in Nuten 26 (siehe die vergrößerte Detaildarstellung der Figur 8) eingehängt. Diese Gleitschienen 25 können in solchen Bereichen der Seitenwände 1 eingehängt werden, in denen das Obertrum (nicht dargestellt) einer Energieführungskette gestützt werden soll.

Die Gleitschiene 25 weist einen oberen Schenkel 28, der sich an die seitliche Fläche 14 der Basis-Führungswand 4 anlegt, auf. In dem Übergangsbereich zwischen den beiden Schenkeln ist ein Haltesteg 29 angeformt, der in die Nut 26 der Führungswand 4 eingehängt ist. Die Nut 26 weist einen nach oben vorstehenden Rand 30 auf, der durch einen Vorsprung (ohne Bezugszeichen) des Haltestegs 29 hintergriffen wird. Gleichzeitig hintergreift ein oberer, vorstehender Rand 31 ein entsprechendes Flächenteil 32, das die Öffnung der Nut 26 begrenzt. Um die Gleitschiene 25 von der Führungswand 4 zu lösen, wird die Gleitschiene 25 angehoben, so dass sich deren unterer Bereich von dem vorstehenden Rand 30 löst, so dass dann die Gleitschiene 25 nach oben geschwenkt werden kann, um den Haltesteg 29 aus dem Schlitz zu lösen. Um eine solches Schwenken der Gleitschiene 25 zuzulassen, sind die Nut 26 einerseits und der Haltesteg 29 entsprechend dimensioniert. Auch ist, wie in Figur 8 zu sehen ist, ein die Nut 26 nach innen begrenzender Steg schräg ausgerichtet und bildet gleichzeitig eine Anlagefläche für eine Teilfläche des Haltestegs 29.

Vorzugsweise werden das Grundelement 2, mit dem plattenförmigen Sockelteil 3 und der Basis-Führungswand 4 sowie die Aufbau-Führungswände 13, aus Aluminium gefertigt; allerdings könnten sie auch aus Kunststoff hergestellt werden, wobei allerdings Aluminium als das bevorzugte Material anzusehen ist. Die Gleitschienen sollten dagegen aus Kunststoff gefertigt werden, da Kunststoff bessere Gleiteigenschaften zeigt.

Soweit in der vorstehenden Beschreibung die Führungswände aufeinander gesteckt werden (das gilt auch für die Verbindung zwischen Sockelteil und Basis-Führungswand), so können diese auch von der Stirnseite aus ineinander geschoben werden, wie dies bereits erläutert wurde. Die steckbare Verbindung ist als bevorzugt anzusehen, da sie während der Montage weniger Raum erfordert und unter Umständen einfacher durchzuführen ist, da das seitliche Ineinanderschieben der Teile durch zu große Reibungskräfte gerade dann schwierig wird, wenn die einzelnen Teile von großer Länge sind.

## Patentansprüche

1. Führungsrinne zum Führen von Energieführungsketten mit zwei Seitenwänden, wobei mindestens eine der Seitenwände aus einem Sockelteil, das Befestigungselemente aufweist, und einer senkrechten Basis-Führungswand aufgebaut ist,
**dadurch gekennzeichnet,**
**dass** die Führungswand (4) mit dem Sockelteil (3) ein Grundelement (2) bildet und
**dass** an der oberen freien Kante (15) der Basis-Führungswand (4) Verbindungselemente (14, 19; 20) angeformt sind, auf die mindestens eine weitere die Basis-Führungswand (4) erhöhende Aufbau-Führungswand (13), die angeformte Verbindungselemente (16, 18; 21) aufweist, aufsteckbar oder aufschiebbar ist und mittels denen eine solche Aufbau-Führungswand (13) an der Basis-Führungswand (4) verriegelbar ist.

2. Führungsrinne nach Anspruch 1, **dadurch gekennzeichnet, dass** die Basis-Führungswand (4) und das Sockelteil (3) als getrennte Teile ausgebildet sind, die mittels angeformter Verbindungselemente (14, 19, 20; 16,18,21) verbunden sind.

3. Führungsrinne nach Anspruch 1 oder 2, **dadurch gekennzeichnet, dass** jede Aufbau-Führungswand (13) an der Oberseite (15) und an der Unterseite (16) jeweilige korrespondierende Verbindungselemente (14, 19, 20; 16, 18, 21) aufweist, so dass diese Aufbau-Führungswände (13), um die Höhe des Seitenteils (1) zu vergrößern, aufeinander steckbar und verriegelbar sind.

4. Führungsrinne nach einem der Ansprüche 1 bis 3, **dadurch gekennzeichnet, dass** die Verbindungselemente (14, 19, 20; 16, 18, 21) an den jeweiligen Kanten der Basis-Führungswand (4) und der Aufbau-Führungswände (13) eine Art einer Nut-Feder-Verbindung (20, 21) bilden.

5. Führungsrinne nach Anspruch 4, **dadurch gekennzeichnet, dass** die Verbindungselemente Hakenteile (18) aufweisen, die sich an der jeweiligen anderen Führungswand verhaken (19).

6. Führungsrinne nach Anspruch 5, **dadurch gekennzeichnet, dass** sich die Hakenteile (18) unlösbar verbinden.

7. Führungsrinne nach einem der Ansprüche 4 bis 6, **dadurch gekennzeichnet, dass** die Verbindungselemente (16, 18) an der Kante der Führungswand (4; 13) durch zwei Schenkel (16) gebildet sind, die die Kante (15) der damit verbunden Führungswand (4; 13) seitlich übergreifen.

8. Führungsrinne nach Anspruch 7, **dadurch gekennzeichnet, dass** die zwei Schenkel (16) parallel zueinander verlaufen.

9. Führungsrinne nach Anspruch 8, **dadurch gekennzeichnet, dass** die zwei Schenkel (16) einen Teil der Außenfläche (17) der Führungswand (4; 13) bilden.

10. Führungsrinne nach Anspruch 7, **dadurch gekennzeichnet, dass** die seitlichen Flächen (14) im Bereich der Kante (15), die durch die Schenkel (18) übergriffen werden, keilförmig zu der Kante (15) hin zulaufen.

11. Führungsrinne nach einem der Ansprüche 7 bis 10, **dadurch gekennzeichnet, dass** zwischen den beiden Schenkeln (16) der einen Kante der Führungswand einerseits und an der anderen Kante (15) der anderen Führungswand andererseits ineinander greifende Zentrierelemente (21, 20) vorgesehen sind.

12. Führungsrinne nach Anspruch 11, **dadurch gekennzeichnet, dass** die Zentrierelemente durch mindestens einen Steg (21) einerseits und mindestens eine dazu korrespondierende Nut (20) andererseits gebildet sind.

13. Führungsrinne nach Anspruch 12, **dadurch gekennzeichnet, dass** die mindestens eine Nut (20) an der Kante zwischen den keilförmig zulaufenden Flächen (14) gebildet ist und der mindestens eine Steg (21) an der Kante zwischen den beiden Schenkeln (16) gebildet ist.

14. Führungsrinne nach einem der Ansprüche 1 bis 13, **dadurch gekennzeichnet, dass** die Seitenwand (1) über die Länge der Führungsrinne in einzelne Abschnitte (4) unterteilt ist und mehrere Führungswände (4) in Folge hintereinander angeordnet sind.

15. Führungsrinne nach Anspruch 14, **dadurch gekennzeichnet, dass** auf die Basis-Führungswände (4) entsprechende Abschnitte von Aufbau-Führungswänden (13) aufgesteckt sind, wobei die jeweiligen Stoßstellen (12) der übereinander angeordneten Führungswände (4, 13) zueinander versetzt sind.

16. Führungsrinne nach Anspruch 14 oder 15, **dadurch gekennzeichnet, dass** im Bereich einer Stoßstelle (12) zwischen zwei Führungswänden (4, 13) mindestens ein Zentrierelement (23) in die Stirnseite der Führungswände (4, 13) eingesetzt ist.

17. Führungsrinne nach Anspruch 16, **dadurch gekennzeichnet, dass** das Zentrierelement durch ein stiftförmiges Teil (23) gebildet ist.

18. Führungsrinne nach einem der Ansprüche 1 bis 17, **dadurch gekennzeichnet, dass** der Sockelteil (3) des Grundelement (2) durch ein plattenförmiges Teil gebildet ist.

19. Führungsrinne nach einem der Ansprüche 1 bis 18, **dadurch gekennzeichnet, dass** der Sockelteil (3) des Grundelements Verbindungsteile (14, 19, 20; 16, 18, 21) aufweist, die zu den Verbindungsteilen der einen Kante der Basis-Führungswand (4) korrespondieren, so dass eine solche Basis-Führungswand (4) mit dem Sockelteil (3) des Grundelements verbindbar ist.

20. Führungsrinne nach einem der Ansprüche 1 bis 19 , **dadurch gekennzeichnet, dass** in das Sockelteil (3) des Grundelements Befestigungselemente (5) eingreifen, mit denen das Sockelteil (3) an einer Unterlagefläche (10) verankerbar ist.

21. Führungsrinne nach Anspruch 20, **dadurch gekennzeichnet, dass** das Befestigungselement durch ein plattenförmiges Teil (5) gebildet ist, das eine Dicke aufweist, die in etwa der Dicke des Sockelteils (3) entspricht.

22. Führungsrinne nach Anspruch 20 oder 21, **dadurch gekennzeichnet, dass** sich das Befestigungselement (5) an die Kante (6) des Sockelteils (3) anschließt und daran verhakt.

23. Führungsrinne nach einem der Ansprüche 19 bis 22, **dadurch gekennzeichnet, dass** zwischen Sockelteil (3) und Befestigungselement (5) eine die Breite des Sockelteils (3) verbreiternde Leiste eingefügt ist.

24. Führungsrinne nach einem der Ansprüche 20 bis 23, **dadurch gekennzeichnet, dass** das Befestigungselement (5) jeweils an seinen seitlichen Kanten Verbindungsteile (11) aufweist, so dass mittels dieser Verbindungsteile (11) zwei dieser Befestigungselemente (5) seitlich miteinander verbindbar sind.

25. Führungsrinne nach einem der Ansprüche 20 bis 24, **dadurch gekennzeichnet, dass** an dem Sockelteil (3) Verbindungsteile in Form von Nuten (6) und/oder Stegen ausgebildet sind, in die sich korrespondierende Verbindungsteile in Form von Nuten und/oder Stegen (7) des Befestigungselements (5) und/oder der Leiste einhaken.

26. Führungsrinne nach Anspruch 25, **dadurch gekennzeichnet, dass** die in den Sockelteil (3) eingehakte Leiste an ihrer freien Längskante Nuten und/oder Stege aufweist, die den Nuten und/oder Stegen des Sockelteils (3) entsprechen.

27. Führungsrinne nach einem der Ansprüche 1 bis 26, **dadurch gekennzeichnet, dass** die Führungswände (4, 13) als Kastenprofil ausgebildet sind.

28. Führungsrinne nach einem der Ansprüche 1 bis 27, **dadurch gekennzeichnet, dass** in den Seitenflächen (14) der Führungswände (14; 17) in Längsrichtung parallel zu den Verbindungskanten (15) Befestigungsnuten (26) ausgebildet sind.

29. Führungsrinne nach Anspruch 28, **dadurch gekennzeichnet, dass** in die Befestigungsnuten (26) Auflageelemente (25) eingehängt sind.

30. Führungsrinne nach einem der Ansprüche 1 bis 29, **dadurch gekennzeichnet, dass** die Führungswände (4, 13), die Sockelteile (3) und die Leisten aus Aluminium gefertigt sind.
